# EUROPEAN PATENT SPECIFICATION

(11) **EP 1 156 226 B1**
(45) Date of publication and mention of the grant of the patent: **19.05.2004**
(21) Application number: 01100632.7
(22) Date of filing: 11.01.2001
(51) Int. Cl.: F16B 12/20, F16B 12/26

(54) **Joint for the quick and reversible connection of two parts of a piece of furniture in square with each other**
Verbindungsvorrichtung zum schnellen, lösbaren und rechtwinkligen Verbinden von zwei Teilen eines Möbelstückes
Joint pour une connexion rapide et réversible entre deux parties en équerre d'une pièce de meuble

(30) Priority: 16.05.2000 IT BO000288
(43) Date of publication of application: 21.11.2001
(73) Proprietor: Destro, Gianfranco, 35135 Altichiero, Province of Padova (IT)
(72) Inventor: Destro, Gianfranco, 35135 Altichiero, Province of Padova (IT)
(74) Representative: Porsia, Attilio, Dr.

(56) References cited:
- DE-A- 2 340 307
- DE-U- 20 002 307
- US-A- 4 127 353

## Description

The present invention refers to a joint for the quick and reversible connection of two parts of a piece of furniture positioned in square with each other, particularly for the connection of horizontal planes to the vertical walls of a piece of furniture. A joint of this kind according to the preamble of claim 1 is already known from DE-A-2 340 307. Furthermore there are known devices for this aim, provided with a "L" shaped, usually "zama" alloy bracket, which is fixed on the piece of furniture vertical wall, being the vertical part of said bracket shaped so to embody the wedge-shaped and progressive setting male of a dovetail joint. In connection with the side of the plane to be fixed onto said vertical wall of the piece of furniture, on the lower face of the same plane is obtained a vertical and dead hole, which is partially open on the adjacent vertical side of the plane and into which is inserted by pressure a bush usually of plastic, provided by the side with anti-take off reliefs and having open on the side turned to said vertical side and on the plane lower surface, a cavity or vertical female, with dovetail outline and with a shape complementary to the one of the male of said bracket. Fitting together the two complementary parts of the joint, the horizontal plane is fixed to the vertical wall of the piece of furniture, with the bush resting on the bracket horizontal base.

To avoid the accidental lifting of the horizontal planes of the piece of furniture, it is known to fix the bush to the bracket and said fixing is actually made with screws, or through a door bolt rotably assembled in the bush, accessible through an hole of the horizontal base of the bracket and such to hook a recess provided in the vertical male of the same bracket. The rotating bolt is normally provided for the operating by means of screwdriver from both ends, so that in case the device in question is assembled on a plane very close to the floor said bolt can be accessed from above through a little hole open on the upper face of said plane. These solutions, with rotating fixing parts, offer the advantage of having a functioning easy to understand even by who is not expert in the field and in the future will have to open the joint, but have nevertheless the disadvantage of a long time of activation in the fixing of the horizontal planes to the vertical walls of the piece of furniture.

To avoid these disadvantages, joints of the type above described are known, where the bush is provided with a tooth assembled on a flexible tongue which by the coupling of the vertical female of the bush itself to the male of the bracket, hooks automatically to a recess provided on the same male. To open this type of joint it is necessary to work with the point of a screwdriver on said flexible tongue with the hooking tooth, to move it away from its hooking seat. These type of joints, although on one side they have the advantage of the assembly easiness and quickness, on the other side they have the disadvantage of a difficult understanding of the functioning by the persons with little experience who in the future could have to disassembly the piece of furniture and have the disadvantage of showing a lack of reliability, because of the precariousness of the hook of the plastic tooth of the flexible tongue with the seat of the metal bracket.

The invention aim to obviate these and other disadvantages of the known technique, through the following solution idea. The bush is provided with a rotating door bolt which has the tooth turned to the position for the fixing to the bracket seat and has the tooth itself with a wedge shaped outline, and a tapered lower part. The bolt is then assembled in its own seat with the possibility to oscillate in contrast with an elastic mean, so that its tooth snaps into the seat of the bracket when onto this one is inserted the bush female. To open the joint, when it is necessary to disassemble the planes of the piece of furniture, it is sufficient to turn the bolt to a preferably obliged direction.

Other features of the invention, ad the consequent advantages, will be better cleared by the following description of a preferred embodiment form of the same invention, shown as a mere not limitative example in the figures of the two enclosed drawing plates, where:
- figs. 1, 2 and 3 are side views and with parts in section of the two joint parts assembled on their respective components of the piece of furniture and shown respectively before the coupling, in the coupling phase and by coupling already made;
- figs. 4 and 5 are respectively bottom and top plan views of the bush of the joint in question;
- fig. 6 shows some details of the bush sectioned according to the line VI-VI of figure 5;
- fig. 7 is a perspective view of the bush rotating bolt;
- figs. 8 and 9 are partial and bottom plan views of the bush with little embodiment changes.

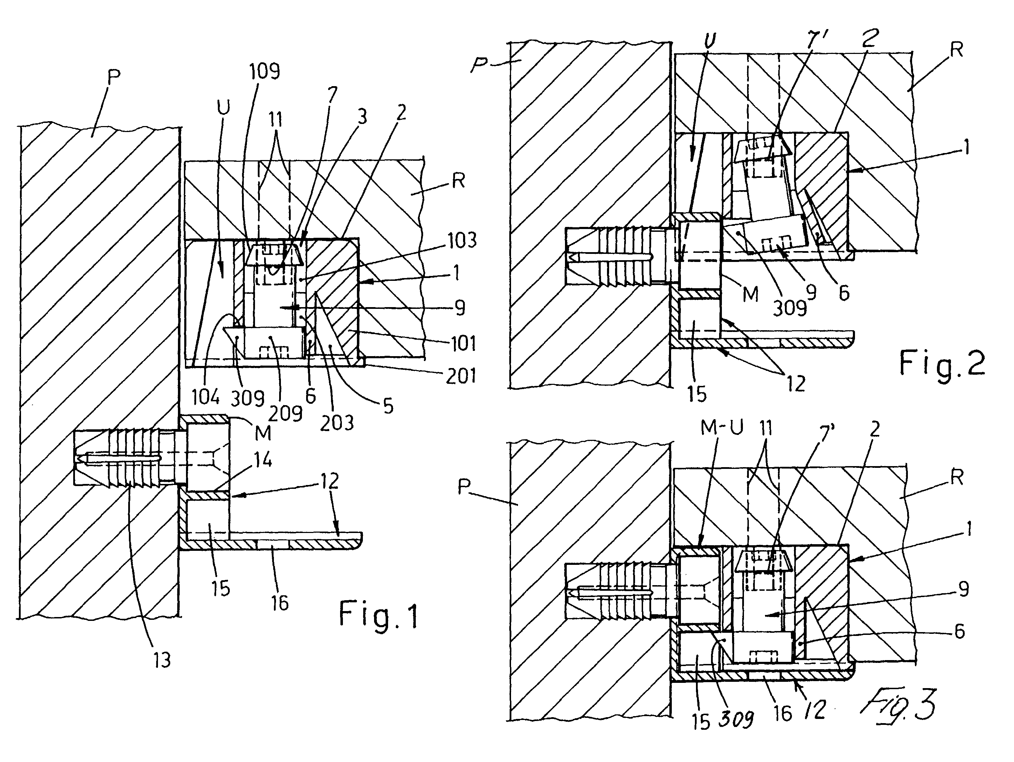

From figures 1, 4, 5 and 6 it is noticed that the bush 1 is made of suitable plastic material and includes a cylindrical shaped body 101, provided sideways of reliefs 301 with an anti-take off outline, which keep the bush itself in the housing dead hole 2 obtained on the lower face of the horizontal plane R of the piece of furniture, on which said body 101 rests with an end collar 201. The housing hole 2 is partially open on the head surface with which the plane R is joined to the vertical wall P of the piece of furniture, so that the bush has in sight, through said opening of the hole 2, the levelled part where is open the cavity or female U of the wedge shaped and dovetail joint of the bush, turned so to converge upwards.

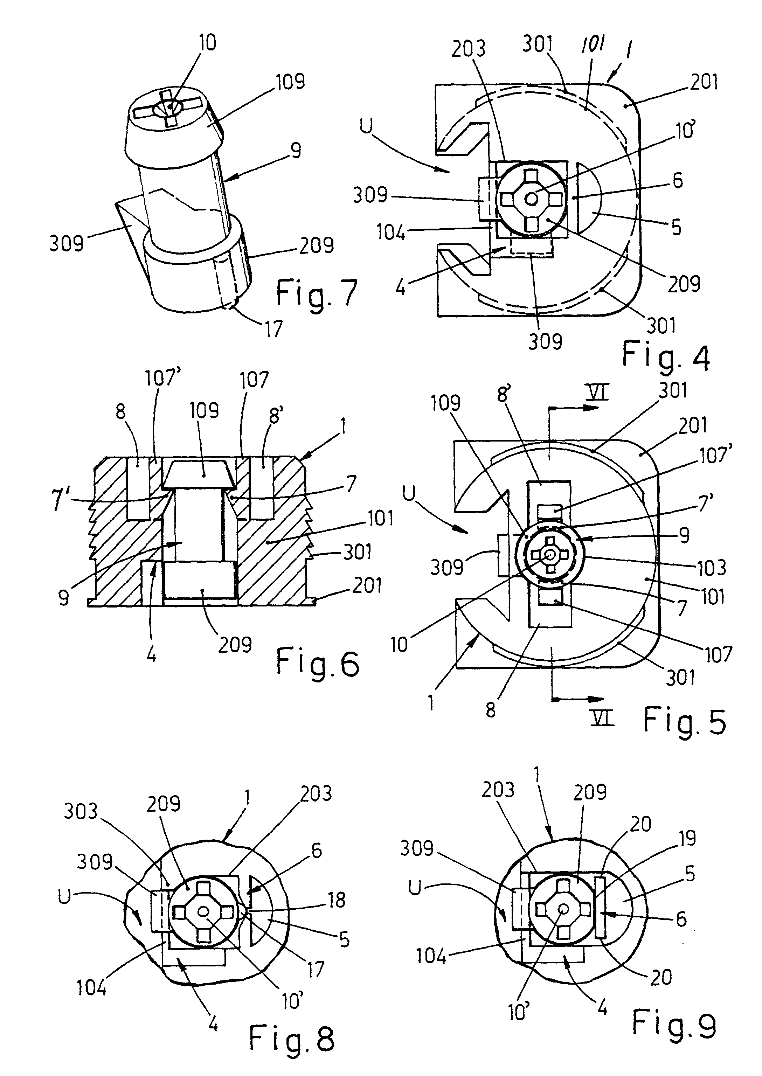

The bush 1 is axially or parallel as to its axis provided with a seat 3 which is open on the face turned upwards of the bush itself, with a cylindrical and round section part 103 (figs. 1, 5) and which is instead open on the opposite face of the same bush, with a square section part 203 circumscribing said part 103 (figs. 1, 4). On the same lower face, the bush has an L shaped recess 4, having suitably depth, and open with the side 104 in the female U of the same bush. In contrast with said open side 104 of the recess 4, the bush has on the lower face a recess 5 for instance with a circle sector plan or other suitable shape, having the same depth of the part 203 of said seat 3 and giving to the close wall 6 of said part, suitable flexibility characteristics (see later on).

In the cylindrical part 103 of said seat 3 (figs. 5, 6) it projects teeth, identical, opposite and on the same plane 7, 7', with wedge outline, tapered downwards, integral by portions 107, 107' of the bush body, they are tongue shaped and made flexible by being bordered by recesses 8, 8' open besides on the bush upper face, also in the part 103 of the seat 3. The teeth 7, 7' are positioned on a common ideal plane which is parallel to the open side 104 of the recess 4 (figs. 4, 5).

In the seat 3 of the bush 1, it is inserted from the bottom a cylindrical cask or bolt 9 as shown in figure 7, made for example of "zama" alloy and characterized by the fact it has a frustum of cone head 109 provided on the lower base and in sight with a recess 10 for the operating by means of screwdriver and characterized by the fact it has a reinforced base 209, for example having cylindrical shape, provided with a radially extending tooth 309 with wedge-shaped outline and lower side oblique said base being provided on the lower face with a recess 10' analogous to the 10 one (fig. 4). The head largest part and the base of the bolt 9 have for example a diameter substantially equal to the one of the part 103 of the seat 3 and the bolt itself is dimensioned and orientated so that in the phase of insertion into the seat 3, its head 109 snaps on the teeth 7, 7' of the bush 1 and the tooth 309 rests on the open side of the recess 4, while the base 209 is supported by the wall 6, as shown in figures 1, 4 and 5.

If the plane R of the piece of furniture is destined to be positioned close to the floor, the same plane can be eventually provided with an hole 11 (fig. 1) upwardly open, to allow in case of need the actuating from above of the bolt 9.

In figure 1, with 12 is indicated the bracket, usually of "zama" alloy and with L shaped side outline, having vertically the male M of the wedge-shaped and dovetail joint system, complementary to the female U of the bush. The bracket is fixed to the male M on the vertical Wall P of the piece of furniture, for example with a screw or an expansion plug 13 of the known type, housed with the head in a through seat 14 obtained on the same male M. Under this seat, the male M has in sight a seat 15 having at least the upper side horizontally oriented.

The base of the bracket 12 is provided with an hole 16.

When the bush 1 is assembled with the female U onto the male M of the bracket 12, as shown subsequently in figures 2 and 3, the inclined plane of the bolt 9 tooth 309 co-operates with the front part in sight of the same male M and makes said bolt oscillate in contrast with the wall 6 which bends and moves into the recess 5. The bolt makes fulcrum with its head 109 on the teeth 7, 7' and with its base moves away from the male M, allowing the tooth 309 to creep to the front in sight of said male. When the insertion of the bush is completed, the tooth 309 comes to connection with the male M seat 15 and snaps into said seat under the pushing of the wall 6 which for elastic memory comes back to the initial position. In this way the bush is locked to the bracket 12, without further operations. The lock proves to be absolutely reliable since it is obtained through the co-operation between metal parts. It is all the same agreed that the bolt 9 can also be made in suitable plastic material.

To open the joint as described, it is sufficient to give a ninety degrees turning to the bolt 9, by inserting a screwdriver into the hole 16 or into the hole 11, to operate on the lower carving 10' or on the upper one 10 of the same bolt. The bolt turning is in a fixed direction and leads to the moving back of its tooth 309 into the recess 4 side part, as shown in figure 4 with dotted line. Under this condition the bush 1 can be taken off from the bracket 12 and the plane R of the piece of furniture can be unlocked from the wall P.

In order to keep the bolt 9 tooth 309 in the orientation useful for the snapping into the seat 15 of the bracket 12, the base 209 of the same bolt can be provided, in opposition with said tooth and parallel to its own axis, with a ribbing in relief 17 (figs. 7, 8) which for example houses in a little recess obtained by a median cut 18 dividing into two equal parts the wall 6 of contrast to the oscillation of the same bolt in the phase of figure 2. This same condition can be differently ensured by the co-operation of a levelled part 19 of the bolt base 209 with the flexible wall 6, which as shown in figure 9 can be made more flexible through cuts 20 which separate both the ends form the bush body. Figure 8 shown also the variation according to which the bolt tooth 309, in the active position, leans with one of its sides against a shoulder 303 of the seat 203 part. This condition helps to keep the tooth 309 correctly orientated in the female U of the bush and so the rotation of the bolt for the deactivation of the same tooth 309, can be performed just counterclockwise according to figure 8, so that the person who has to open the joint in question is not disorientated.
Obviously, the protection field of the present patent application extends also to those joints where the bush 1 is inserted into a dead and horizontal hole obtained on the head vertical wall of the plane R of the piece of furniture and has the female U on its own base in sight, the whole in a way intuitive and easily to embody by the technicians of the filed. Other variations can be referred to the fact that the seat 3 housing the rotating bolt can be arranged to make the same bolt translate, instead of oscillating or besides such a movement, a movement always in contrast with the action of said elastic means obtained integrally or put on the bush 1.

## Claims

1. Joint for the quick and reversible connection of two parts of a piece of furniture in square with each other, particulary for the connection of an horizontal plane (R) and a vertical wall (P), provided with a bush (1) usually made of plastic material, which is inserted into a dead hole of said plane (R) and which is partially visible on the head of the same plane, where it shows the cavity or female (U) of a dovetail joint, which can be inserted onto the complementary male (M) of a bracket (12), particulary made of metal, fixed with the male itself vertically on said vertical wall (P) of the piece of furniture and on whose base rests said bush provided with a seat axial or parallel to its own axis, which rotatable houses a bolt, particulary made of metal, at its turn provided at its ends with carvings (10, 10') for the actuating by means of a tool inserted through an hole (16) of said bracket (12) base or trough an hole (11) made on the plane of the piece of furniture (R), being said bolt provided with a radial tooth (309) which after the rotation of the same bolt can be inserted into and removed from a seat (15) of the bracket (12) male, **characterized in that** said bolt is assembled in its own seat (3) so that its tooth (309) projects perpendicularly into the female (U) of the bush, being said tooth **characterized by** a wedge-shaped outline, with an inclined lower plane which, in the phase of insertion of the female (U) of the bush onto the male (M) of the joint bracket (12), co-operates with said male which makes it move back since said bolt is assembled in its own seat to be able to perform in case of need an oscillation and/or a translation allowing said tooth to move away from said bush female (U), in contrast with the action of elastic means (6), this all in a way that during the insertion of the bush onto the joint bracket, the bolt tooth snaps automatically in the male (M) seat (15).

2. A joint according to claim 1, where the rotating bolt (9) is assembled in its own seat so that with the end opposed to the one provided with the hooking tooth (309), can perform in said seat an oscillation around an orthogonal axis to said tooth, while with the other end provided with the hooking tooth (309) it co-operates with an elastic mean (6) which gives way in the phase where the female (U) of the bush (1) is inserted onto the male (M) of the bracket (12).

3. A joint according to claim 2, where the elastic mean is at least a flexible wall or tongue (6) integrally obtained on the bush (1) body.

4. A joint according to the preceding claims, where the bolt (9) is provided with a frustum of cone head (109) having on its smallest face and in sight a carving (10) for its driving by means of a screwdriver, and it is provided on the other end of a cylindrical base (209) having for example the same diameter of the largest part of said head, provided with a carving (10') for its driving by means of a screwdriver and having integrally obtained the radial and wedge-shaped tooth (309), being the seat (3) of the bush, which rotatably houses the bolt, provided with a cylindrical upper part (103), with a diameter almost equal to the one of the largest part of said bolt head (109), in said part projecting opposed and wedge-shaped teeth (7, 7') with which snaps said bolt head, being said teeth on a plan ideally parallel to the transversal direction of the female (U) of the bush and being integral with parts of the wall of said seat part, said parts being made flexible as tongues (107, 107'), by adjacent recesses (8, 8') obtained in the bush body, being the remaining part (203) of the seat housing the bolt, provided with a conformation with substantially square plan and such to circumscribe said round section part (103) and on the lower face of the bush said last part of seat is partially delimited by an L plan recess (4), on whose side (104), which is open into the bush female (U), normally rests the tooth (309) of the rotating bolt (9), while the other side of said recess has a width such that in it can be inserted said tooth when the bolt is turned at 90°, being provided in opposition with said open side (104) of said recess (4), a recess (5) as well open on the bush lower face, which gives flexibility characteristics to the wall (6) of said last seat part (203) which elastically co-operates with the bolt to allow the oscillation during the coupling of the bush with the joint bracket.

5. A joint according to claim 4, where the flexible wall (6) of the seat part (203) housing the rotating bolt (9) is longitudinally provided with a median cut (18) which improves the flexibility of said wall.

6. A joint according to claim 5, **characterized in that** with the median cut (18) of the flexible wall (6) of the seat part (203) which houses the rotating bolt (9), co-operates a longitudinal relief (17) of the base reinforcement (209) of the same bolt (9), in order to normally keep the tooth (309) of the same bolt in the correct position projecting into the female (U) of the bush (1).

7. A joint according to claim 4, where the flexible wall (6) of the last seat part (203) housing the rotating bolt (9), is provided longitudinally and at the opposite ends, with cuts (20) improving the flexibility of said wall.

8. A joint according to claim 4, where the reinforced base (209) of the rotating bolt (9) is provided with a secant levelling (19) leaning against the flexible wall (6) of the last seat part (203) housing the same bolt, in order to normally keep the tooth (309) of the same bolt in the correct position projecting into the female (U) of the bush (1).

9. A joint according to claim 4, where the tooth (309) of the rotating bolt (9), when it is in the active position, leans with one of its sides against a shoulder (303) of the seat (203) part housing the base of the bolt itself.

## Patentansprüche

1. Gelenkstück für das schnelle und umkehrbare Verbinden von zwei Teilen eines Möbelstücks miteinander unter 90°, insbesondere zum Verbinden einer horizontalen ebenen Fläche (R) und einer vertikalen Wand (P), versehen mit einer im allgemeinen aus Kunststoff bestehenden Buchse (1), die in ein Sackloch der Fläche (3) eingesetzt und auf der Oberseite der gleichen Fläche teilweise sichtbar ist, wo der Hohlraum oder das aufnehmende Teil (U) einer Schwalbenschwanzverbindung zu sehen ist, die in ein komplementäres Einsteckteil (M) eines Bügels (12), insbesondere aus Metall, eingesteckt werden kann, fixiert mit dem Einsteckteil selbst vertikal auf der vertikalen Wand (P) des Möbelstücks und auf dessen Grundfläche die Buchse ruht, versehen mit einem Sitz axial oder parallel zu ihrer eigenen Achse, die einen insbesondere aus Metall bestehenden Bolzen drehbar aufnimmt und an ihren Enden ihrerseits mit Aussparungen (10, 10') zum Betätigen mittels eines Werkzeugs, eingesetzt durch ein Loch (16) der Grundfläche des Bügels (12) oder durch ein Loch (11), ausgebildet auf der Fläche des Möbelstücks (R), wobei der Bolzen versehen ist mit einem radialen Zahn (309), der nach dem Drehen des gleichen Bolzens in einen Sitz (15) des Einsteckteils des Bügels (12) eingesetzt und aus ihm herausgenommen werden kann, **dadurch gekennzeichnet, daß** der Bolzen in seinem eigenen Sitz (3) zusammengesetzt ist, so daß sein Zahn (309) senkrecht in das Aufnahmeteil (U) der Buchse hineinragt, wobei der Zahn durch einen keilförmigen Grundriß charakterisiert ist mit einer geneigten unteren Fläche, die in der Phase des Einsetzens des Aufnahmeteils (U) der Buchse in das Einsteckteil (M) des Verbindungsbügels (12) mit dem Einsteckteil zusammenarbeitet, das es zum Zurückbewegen veranlaßt, da der Bolzen in seinem eigenen Sitz zusammengesetzt ist zum Durchführen einer Schwingung im Bedarfsfall und/oder einer Querverschiebung, was dem Zahn eine Bewegung weg von dem Aufnahmeteil (U) der Buchse gestattet im Gegensatz zu der Einwirkung des elastischen Mittels (6), das alles auf eine Weise, daß während des Einsetzens der Buchse auf den Verbindungsbügel der Bolzenzahn automatisch in das Einsteckteil (M) des Sitzes (15) einschnappt.

2. Ein Gelenkstück nach Anspruch 1, wobei der sich drehende Bolzen (9) in seinem eigenen Sitz zusammengesetzt ist, so daß er mit dem Ende, das dem mit dem Greifhaken (309) versehenen Ende entgegengesetzt ist, in dem Sitz eine Schwingung um eine orthogonale Achse gegenüber dem Zahn durchführen kann, während es mit dem anderen, mit dem Greifhaken (309) versehenen Ende zusammenarbeitet, mit einem elastischen Mittel (6), das in der Phase, in der das Aufnahmeteil (U) der Buchse (1) in das Einsteckteil (M) des Bügels (12) eingesetzt wird, nachgibt.

3. Ein Gelenkstück nach Anspruch 2, wobei das elastische Mittel mindestens eine flexible Wand oder Zunge (6), integral erhalten auf dem Körper der Buchse (1), ist.

4. Ein Gelenkstück nach den vorhergehenden Ansprüchen, wobei der Bolzen (9) mit einem Stumpf des konischen Kopfes (109) versehen ist, der auf seiner kleinsten Seite und im Blickfeld eine Aussparung (10) zu seinem Antrieb mit Hilfe eines Schraubenziehers aufweist, und vorgesehen ist auf dem anderen Ende einer zylindrischen Grundfläche (209) mit zum Beispiel dem gleichen Durchmesser des größten Teils des Kopfes, versehen mit einer Aussparung (10') zu seinem Antrieb mit Hilfe eines Schraubenziehers und integral erhaltend den radialen und keilförmigen Zahn (309), als den Sitz (3) der Buchse, die den Bolzen drehbar aufnimmt, und versehen mit einem zylinderförmigen oberen Teil (103), mit einem Durchmesser fast gleich dem des größten Teils des Bolzenkopfes (109), in welchem Teil vorstehend entgegengesetzt gerichtete und keilförmige Zähne (7, 7') mit denen der Bolzenkopf einschnappt, seiend die Zähne auf einer Ebene im Idealfall parallel zu der Querrichtung des Aufnahmeteils (U) der Buchse und integral mit Teilen der Wand dieses Sitzteils, wobei diese Teile als Zungen (107, 107') flexibel ausgebildet sind durch benachbarte Aussparungen (8, 8') erhalten in dem Buchsenkörper, seiend der verbleibende Teil (203) des den Bolzen aufnehmenden Sitzes, versehen mit einer Ausgestaltung mit einer im wesentlichen quadratischen Ebene und zum Umschließen des Teils (103) mit kreisförmigem Querschnitt, und auf der Unterseite der Buchse dieses letzte Teil des Sitzes teilweise durch eine L-Plan-Aussparung (4) begrenzt wird, auf welcher Seite (104), die in Richtung auf das Buchsenaufnahmeteil (U) offen ist, im Normalfall der Zahn (309) des sich drehenden Bolzens (9) aufsitzt, während die andere Seite der Aussparung eine Weite dergestalt aufweist, daß bei Drehen des Bolzens auf 90° der Zahn in sie eingeführt werden kann, versehen in Opposition mit der offenen Seite (104) der Aussparung (4), eine Aussparung (5) auch offen auf der Buchsenunterseite, was der Wand (6) des letzten Sitzteils (203) Flexibilitätscharakteristika verleiht, wobei dieses Teil mit dem Bolzen elastisch zusammenarbeitet zum Ermöglichen der Schwingung während des Zusammenkuppelns der Buchse mit dem Verbindungsbügel.

5. Ein Gelenkstück nach Anspruch 4, wobei die flexible Wand (6) des den sich drehenden Bolzen (9) aufnehmenden Sitzteils (203) in Längsrichtung mit einem Mittenschnitt (18) versehen ist, der die Flexibilität dieser Wand verbessert.

6. Ein Gelenkstück nach Anspruch 5, **dadurch gekennzeichnet, daß** der Mittenschnitt (18) der flexiblen Wand (6) des Sitzteils (203), das den sich drehenden Bolzen (9) aufnimmt, zusammenarbeitet mit einem Längsrelief (17) der Grundflächenverstärkung (209) des gleichen Bolzens (9) zum Halten des Zahns (309) des gleichen Bolzens normalerweise in der richtigen Lage vorstehend in das Aufnahmeteil (U) der Buchse (1).

7. Ein Gelenkstück nach Anspruch 4, bei der die flexible Wand (6) des den sich drehenden Bolzen (9) aufnehmenden letzten Sitzteils (203) in Längsrichtung und an entgegengesetzten Enden mit die Flexibilität der Wand verbessernden Schnitten (20) versehen ist.

8. Ein Gelenkstück nach Anspruch 4, bei der die verstärkte Grundfläche (209) des sich drehenden Bolzens (9) mit einer egalisierenden Sekante (19) versehen ist, die sich gegen die flexible Wand (6) des den gleichen Bolzen aufnehmenden letzten Sitzteils (203) anlehnt zum Halten des Zahns (309) des gleichen Bolzens normalerweise in der richtigen Lage vorstehend in das Aufnahmeteil (U) der Buchse (1).

9. Ein Gelenkstück nach Anspruch 4, bei der der Zahn (309) des sich drehenden Bolzens (9) in seiner aktiven Stellung sich mit einer seiner Seiten gegen die Schulter (303) des Sitzes (203) anlehnt teilweise aufnehmend die Grundfläche des Bolzens selbst.

## Revendications

1. Joint destiné à assurer la liaison rapide et réversible de deux parties d'un meuble au carré l'une avec l'autre, en particulier, afin d'assurer la liaison d'un plan horizontal (R) et d'une paroi verticale (P), comportant un manchon (1) réalisé, en général, en matière plastique, qui est inséré dans un orifice borgne dudit plan (R) et qui est partiellement visible au-dessus du même plan, où il présente la cavité ou partie femelle (U) d'un joint en queue d'aronde qui peut être insérée dans la partie mâle complémentaire (M) d'une équerre (12), réalisé, en particulier, en métal, fixée sur la partie mâle elle-même verticalement sur ladite paroi verticale (P) du meuble et sur la base duquel repose sur ledit manchon comportant un siège axial ou parallèle à son propre axe, qui contient une vis pouvant tourner, réalisée, en particulier, en métal, comportant elle-même à ses extrémités des entailles (10, 10') pour sa mise en oeuvre au moyen d'un outil inséré à travers un orifice (16) de la base de ladite équerre (12) ou à travers un orifice (11) réalisé sur le plan du meuble (R), ladite vis comportant une dent radiale (309) qui, après la rotation de la même vis peut être insérée sur un siège (15) de la partie mâle de l'équerre (12) et retirée de celui-ci, **caractérisé en ce que** ladite vis est assemblée sur son propre siège (3) de telle sorte que sa dent (309) se trouve en saillie perpendiculairement à la partie femelle (U) du manchon, ladite dent étant **caractérisée par** un contour en forme de coin avec un plan inférieur incliné qui, dans la phase d'insertion de la partie femelle (U) du manchon sur la partie mâle (M) de l'équerre de joint (12), coopère avec ladite partie mâle qui le renvoie vers l'arrière puisque ladite vis est assemblée sur son propre siège afin de pouvoir réaliser, en cas de nécessité, une oscillation et/ou une translation permettant à ladite dent de s'écarter de ladite partie femelle (U) de manchon, s'opposant à l'action d'un moyen élastique (6), ceci d'une telle manière que durant l'insertion du manchon sur l'équerre de joint, la dent de vis s'encliquette automatiquement sur le siège (15) de la partie mâle (M).

2. Joint selon la revendication 1, dans lequel la vis pouvant tourner (9) est assemblée sur son propre siège de telle sorte que l'extrémité opposée à celle comportant la dent d'accrochage (309) peut réaliser, sur ledit siège, une oscillation autour d'un axe orthogonal à ladite dent, alors qu'avec l'autre extrémité comportant la dent en crochet (309) elle coopère avec un moyen élastique (6) qui assure un guidage dans la phase dans laquelle la partie femelle (U) du manchon (1) est insérée sur la partie mâle (M) de l'équerre (12).

3. Joint selon la revendication 2, dans lequel le moyen élastique est au moins une paroi flexible ou une languette (6) obtenue de manière unitaire sur le corps du manchon (1).

4. Joint selon les revendications précédentes, dans lequel la vis (9) comporte une tête en tronc de cône (109) présentant, sur sa plus petite face et à vue, une entaille (10) afin d'assurer son entraînement au moyen d'un tournevis, et elle comporte, sur l'autre extrémité, une base cylindrique (209) présentant, par exemple, le même diamètre que la partie la plus large de ladite tête, comportant une entaille (10') afin d'assurer son entraînement au moyen d'un tournevis et comportant la dent radiale et en forme de coin obtenue de manière unitaire (309), le siège (3) du manchon, qui contient la vis avec liberté de rotation, comportant une partie supérieure cylindrique (103), avec un diamètre presque égal à celui de la partie la plus large de ladite tête de vis (109), dans ladite partie en saillie opposée à la dent en forme de coin (7, 7'), avec laquelle s'encliquette ladite tête de vis, ladite dent étant sur un plan idéalement parallèle à la direction transversale de la partie femelle (U) du manchon et étant formée de manière unitaire avec des parties de la paroi de ladite partie de siège, lesdites parties étant rendues flexibles comme les languettes (107, 107') par des cavités adjacentes (8, 8') obtenues dans le corps de manchon, la partie restante (203) du siège contenant la vis présentant une configuration avec un plan sensiblement carré et de manière à circonscrire ladite partie de section ronde (103) et sur la face inférieure du manchon ladite dernière partie du siège est partiellement délimitée par une cavité plane en L (4) sur le côté (104), qui débouche dans la partie femelle (U) de manchon, de laquelle repose normalement la dent (309) de la vis pouvant tourner (9), alors que l'autre côté de ladite cavité présente une largeur telle que ladite dent peut être insérée dans celle-ci lorsque la vis est tournée à 90°, une cavité (5) débouchant de même sur la face inférieure de manchon, étant agencée à l'opposé dudit côté débouchant (104) de ladite cavité (4), ce qui assure des caractéristiques de flexibilité à la paroi (6) de ladite dernière partie de siège (203) qui coopère de manière élastique avec la vis afin de permettre l'oscillation au cours du couplage du manchon avec l'équerre de joint.

5. Joint selon la revendication 4, dans lequel la paroi flexible (6) de la partie de siège (203) contenant la vis pouvant tourner (9) comporte une découpe médiane (18) agencée longitudinalement qui améliore la flexibilité de ladite paroi.

6. Joint selon la revendication 5, **caractérisé en ce que**, avec la découpe médiane (18) de la paroi flexible (6) de la partie de siège (203) qui contient la vis pouvant tourner (9), coopère une saillie longitudinale (17) de renforcement de base (209) de la même vis (9), dans le but de maintenir normalement la dent (309) de la même vis dans la position correcte en saillie dans la partie femelle (U) du manchon (1).

7. Joint selon la revendication 4, dans lequel la paroi flexible (6) de la dernière partie de siège (203) contenant la vis pouvant tourner (9) comporte des découpes (20) agencées longitudinalement et au niveau des extrémités opposées, améliorant la flexibilité de ladite paroi.

8. Joint selon la revendication 4, dans lequel la base renforcée (209) de la vis pouvant tourner (9) comporte un méplat sécant (19) incliné contre la paroi flexible (6) de la dernière partie de siège (203) contenant la même vis, dans le but de maintenir normalement la dent (309) de la même vis dans la position correcte en saillie dans la partie femelle (U) du manchon (1).

9. Joint selon la revendication 4, dans lequel la dent (309) de la vis pouvant tourner (9), lorsqu'elle est dans la position active, est inclinée avec l'un de ses côtés contre un épaulement (303) de la partie de siège (203) contenant la base de vis elle-même.
